(19) Europäisches Patentamt / European Patent Office / Office européen des brevets

(11) **EP 2 696 262 A1**

(12) **EUROPEAN PATENT APPLICATION**
published in accordance with Art. 153(4) EPC

(43) Date of publication:
**12.02.2014 Bulletin 2014/07**

(51) Int Cl.:
**G06F 3/033** (2013.01) **G06T 1/00** (2006.01)

(21) Application number: **12767821.7**

(22) Date of filing: **04.04.2012**

(86) International application number:
**PCT/JP2012/059155**

(87) International publication number:
**WO 2012/137801 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2011 JP 2011085210**

(71) Applicant: **NEC CASIO Mobile Communications, Ltd.**
**Kawasaki-shi**
**Kanagawa 211-8666 (JP)**

(72) Inventor: **HIGAKI Yasuhide**
**Kawasaki-shi, Kanagawa 211-8666 (JP)**

(74) Representative: **Vossius & Partner**
**Siebertstrasse 4**
**81675 München (DE)**

(54) **INPUT DEVICE, INPUT METHOD, AND COMPUTER PROGRAM**

(57) An input device detects a sight line position using an elliptical parameter method based on captured data of two cameras of a left eye and a right eye. In the elliptical parameter method, since the accuracy becomes low as an ellipse approximates a circle, weighting is performed in advance for a section on a display image indicated by a sight line. For example, a weight for a section D5 in the nearest distance from a normal line position is set to 0.3. Next, a weight for sections, which distances from the normal line position are next to the section D5, is set to 0.5. Last, a weight for sections in the remotest distance from the normal line position is set to 0.8. Last, a center sight line coordinate value according to both eyes is calculated based on a determined sight line coordinate value corresponding to both cameras.

FIG. 8

**Description**

TECHNICAL FIELD

The present invention relates to an input device, an input method, and a computer program, and more particularly, to an input device, an input method, and a computer program, by which it is possible to analyze a sight line of a user and perform an operation corresponding to a click of a mouse independent of a manual operation.

BACKGROUND ART

In recent years, smart phones have been extensively used and diversified, and various types of devices cooperating with portable terminal devices such as smart phones have emerged.

For example, there also have emerged ski-goggles having an OS (Operating System) and a display function of projecting information of a communication partner, email, SMS, a music play list and the like in front of user's eyes at the time of reception of a telephone call by connecting to smart phones and the like through communication devices conforming to Bluetooth standards.

Thus, wearable smart phones shaped like goggles (glasses) are also expected to emerge in the near future.

If there is only the aforementioned display function, no special input device is required. However, in order to perform a function regarding communication start-up, email display, or the like at the time of call termination, a portable terminal device such as a smart phone needs to be separately provided with an input means called a touch panel or a key.

When such an input means, for example, is used as a display device shaped like goggles (glasses), operativity by using no hands may be impaired.

As sight line detection methods, a corneal reflection method, a sclera reflection method, an iris detection method and the like have been known. However, among these proposed sight line detection methods, the corneal reflection method is mainly used.

The corneal reflection method is a method for radiating near infrared rays into the cornea and calculating a sight line from the center of curvature of the cornea and a sight line vector.

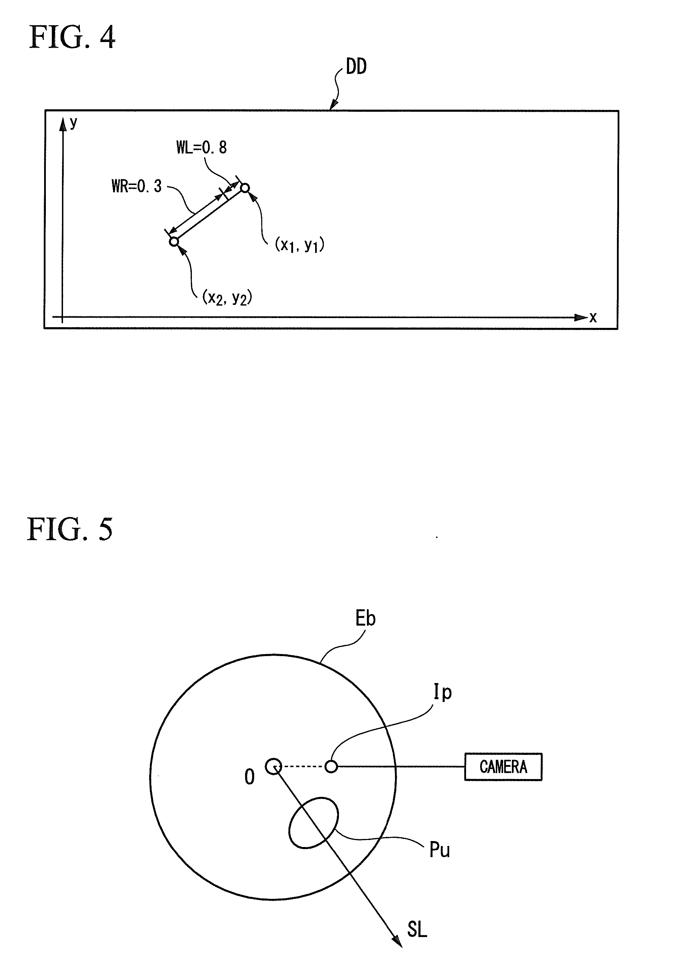

Fig. 5 is an explanatory diagram illustrating a general corneal reflection method for detecting a sight line.

Fig. 5 illustrates a relationship between an eyeball Eb, a pupil Pu, a sight line direction SL, and a camera Ca. The center of curvature of a cornea is calculated from the position of a reflected image when near infrared rays called a Purkinje image Ip are radiated, and a sight line vector is calculated from the Purkinje image Ip and an iris center position O.

However, according to the corneal reflection method, since the near infrared rays are radiated into the eyeball as described above, when it is used for a long time, influence on the eyeball Eb, such as burning of the retina, may occur. In addition, as another method for calculating a rotation angle of an iris, an elliptical parameter method has been known.

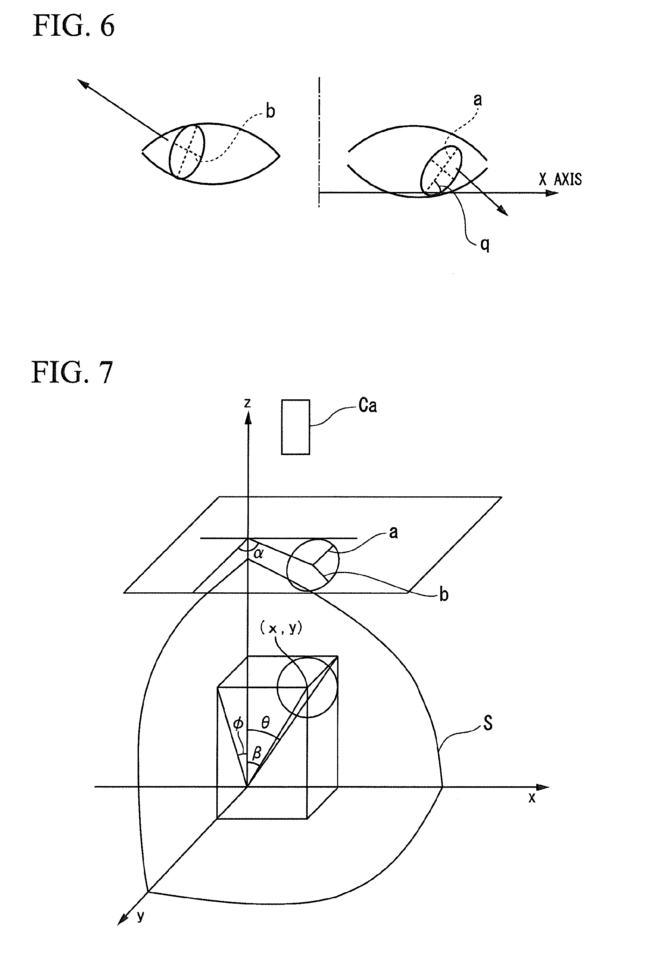

Fig. 6 is an explanatory diagram illustrating a general elliptical parameter method for calculating a rotation angle of an iris.

As illustrated in Fig. 6, the elliptical parameter method is a method in which an iris is recognized as an ellipse by image recognition and a rotation angle of the iris is calculated from a long axis a of the ellipse, a short axis b of the ellipse, and a rotation angle q of the long axis. Fig. 7 is an explanatory diagram illustrating the principle of sight line direction detection by the elliptical parameter method.

The shape of an iris captured by a camera Ca is recognized as an ellipse using an image recognition means.

When a long axis of the ellipse is set as a, a short axis of the ellipse is set as b, and an angle of an iris center on an eyeball with respect to a normal line from the camera Ca to the eyeball is set as $\beta$, the angle $\beta$ can be calculated by $\cos\beta = b/a$.

When the surface of the eyeball is set as S, the center of the eyeball is set as $(x_0, y_0)$, and the radius of the eyeball is set as $r_0$, a rotation angle $\theta$ of the horizontal direction of the eyeball from the center $(x, y)$ of the iris (or the pupil) can be calculated from Equation 1 below and a rotation angle $\phi$ of the vertical direction can be calculated from Equation 2 below.

$$\tan\theta = (x - x_0) / \sqrt{r_0^2 - (x - x_0)^2 - (y - y_0)^2} \quad \cdots (1)$$

$$\tan\phi = (y - y_0) / \sqrt{r_0^2 - (x - x_0)^2 - (y - y_0)^2} \quad \cdots(2)$$

Here, since there is an individual difference in an eyeball center position and an eyeball radius with respect to the camera, it is necessary to perform calibration in advance and calculate individual parameters.

As the calibration method, several methods are generally known.

In addition, since a detailed determination method of the individual parameters is not related to the content of the present invention, a description thereof will be omitted.

A coordinate position on an image display surface is calculated from the angles in the sight line direction, which have been calculated by Equations (1) and (2) above.

Since the elliptical parameter method is different from the aforementioned corneal reflection method and uses no near infrared rays, there is no influence on the eyeball due to the near infrared rays.

However, in the elliptical parameter method, when the ellipse has an approximately circular shape, that is, when the angle of the sight line direction with respect to the normal line from the camera to the eyeball is narrow, since it is not possible to apparently calculate the rotation angle of the long axis, there is a problem that the accuracy becomes low.

In addition, as a well-known technology of this field, for example, Patent Document 1 discloses an input image processor that prevents deviation of a finger pointing a direction from a viewing angle, can precisely detect an indicated direction and motion, is adaptable to a display that reflects a different direction as well, and can recognize an object that is actually indicated. In detail, the input image processor includes a half mirror, an image pickup part that picks up an image reflected by the half mirror, a pointing position detecting part that detects a pointing position, a pointing object recognizing part that recognizes an object at the detected position, an object information storage part that stores object information, an object information retrieving part that retrieves the object information which is stored in the object information storage part, and a display that displays a retrieval result of the object information retrieving part.

Furthermore, for example, Patent Document 2 discloses a sight line detector which sufficiently copes with recalibration by easy calibration to be performed when input of a sight line becomes difficult. In detail, the sight line detector includes a deviation correcting part 2C that performs calibration at one of a plurality of standard points, whose points are known, calculates an error due to motion of the head where an eyeball is located as a detection object, and corrects the position deviation of the sight line detection result based on the calculated error when a recalibration instruction is received. In this way, it is possible to correct the position deviation of the sight line detection result by recalculating a correlation coefficient of a proper value according to the present situation simply by performing recalibration of any one point among the plurality of standard points, so that it is possible to perform the recalibration in a short time and to provide a user with comfortable operability as compared with the conventional art.

Moreover, for example, Patent Document 3 discloses picture compression communication equipment that enables high compressibility without lowering perceived image quality of an observer regardless of a still image or a moving image, can reduce transmission loads of a communication path, and can transmit image information to a plurality of terminals.

In detail, the picture compression communication equipment traces the sight line of an observer who observes a screen display part, and performs data compression processing on picture data so as to turn picture data of a center visual field near the sight line of the observer to low compressibility and turn a peripheral visual field remote from the sight line of the observer to high compressibility.

[Documents of the prior art]

[Patent Documents]

Patent Document 1: Japanese Unexamined Patent Application, First Publication No. 2000-148381
Patent Document 2: Japanese Unexamined Patent Application, First Publication No. 2001-134371
Patent Document 3: Japanese Unexamined Patent Application, First Publication No. 09-009253

DISCLOSURE OF INVENTION

[Problems to be solved by the invention]

However, according to the input device described in the background art, since the corneal reflection method widely used as a sight line detection method is a method for radiating the near infrared rays into the cornea and calculating the sight line from the center of curvature of the cornea and the sight line vector, when it is used for a long time, there is a problem that influence on the eyeball, such as burning of the retina, may occur.

Furthermore, in the case of employing the elliptical parameter method for recognizing the iris as the ellipse and detecting the sight line direction, when the ellipse has an approximately circular shape, that is, when the angle of the sight line direction is narrow with respect to the normal line to the eyeball of the camera, since it is not possible to apparently calculate the rotation angle of the long axis, there is a problem that the accuracy becomes low.

In addition, the technology disclosed in Patent Literature 1 described above includes detecting the direction pointed by the finger of the user to fix the pointing position, and recognizing the object at the detected position. However, the method of the present invention does not require the use of a user's finger.

Furthermore, the technology disclosed in Patent Document 2 described above simplifies the recalibration to be performed when input of a sight line becomes difficult, and is not directly related to the method of the present invention.

Moreover, the technology disclosed in Patent Document 3 described above includes performing the data compression processing on the picture data so as to turn the picture data of the center visual field near the sight line of the observer to the low compressibility and turn the peripheral visual field remote from the sight line of the observer to the high compressibility. On the other hand, in the method of the present invention, weighting is performed for each section on a preset display surface with respect to a detected sight line position, and no data compression processing is performed on the picture data at least in this purpose.

That is, the gist of the present invention is the followings:

(1) In an input device, sight line positions on a display device of a user are calculated using the captured data of two cameras for the left eye and the right eye, and weighting corresponding to preset sections on a display screen is performed for the sight line positions (coordinates), so that a sight line center position of the user is fixed (in this method, empirically valid weighting is performed for individual sight line position information from the left eye and the right eye, so that it is possible to determine sight line positions with a high degree accuracy); and

(2) In the input device, a function equivalent to a click operation of a mouse is achieved by motions of the left eye and the right eye (for example, closing the eyelid of the left eye corresponds to a left click operation and closing the eyelid of the right eye corresponds to a right click operation.

An object of the present invention is to provide an input device capable of determining sight line positions with high accuracy by allowing weighting based on the accuracy verified in response to sight line detection positions (coordinate values) to be performed for the sight line detection positions according to captured data of two cameras for the left eye and the right eye.

[Means for solving the problem]

In order to achieve the aforementioned objects, an input device is provided including: a weighting unit which divides a display screen area of a display device into a plurality of sections, and applies weighted values indicating accuracy to the plurality of sections in advance, the weighted values corresponding to a left eye sight line position and a right eye sight line position of a user; a right eye sight line position detection unit which detects the right eye sight line position of the user on a display screen of the display device based on captured data captured by a camera (CR) for a right eye, which is arranged in order to detect the right eye sight line position of the user, and displays the right eye sight line position using coordinates; a right eye sight line position determination unit which determines a coordinate value of a right eye sight line determination position by multiplying a weight indicating the accuracy and corresponding to the detected right eye sight line position into a coordinate value of the right eye sight line position; a left eye sight line position detection unit which detects the left eye sight line position of the user on a display screen of the display device based on captured data captured by a camera (CL) for a left eye, which is arranged in order to detect the left eye sight line position of the user, and displays the left eye sight line position using coordinates; a left eye sight line position determination unit which determines a coordinate value of a left eye sight line determination position by multiplying a weight indicating the accuracy and corresponding to the detected left eye sight line position into a coordinate value of the left eye sight line position; a sight line position determination unit which determines a center sight line position according to both eyes of the user based on the determined coordinate value of a right eye sight line and the determined coordinate value of a left eye sight line; and an input unit which performs an input process in which the center sight line position is reflected.

Furthermore, an input method according to the present invention includes: a weighting step of dividing a display screen area of a display device into a plurality of sections, and applying weighted values indicating accuracy to the plurality of sections in advance, the weighted values corresponding to a left eye sight line position and a right eye sight line position of a user; a right eye sight line position detection step of detecting the right eye sight line position of the user on a display screen of the display device based on captured data captured by a camera for a right eye, which is arranged in order to detect the right eye sight line position of the user, and displaying the right eye sight line position using coordinates; a right eye sight line position determination step of determining a coordinate value of a right eye sight line determination position by multiplying a weight indicating the accuracy and corresponding to the detected right eye sight line position into a coordinate value of the right eye sight line position; a left eye sight line position detection step of detecting the left eye sight line position of the user on a display screen of the display device based on captured data captured by a camera for a left eye, which is arranged in order to detect the left eye sight line position of the user, and displaying the left eye sight line position using coordinates; a left eye sight line position determination step of determining a coordinate value of a left eye sight line determination position by multiplying a weight indicating the accuracy and corresponding to the detected left eye sight line position into a coordinate value of the left eye sight line position; a sight line position determination step of determining a center sight line position according to both eyes of the user based on the determined coordinate value of a right eye sight line and the determined coordinate value of a left eye sight line; and an input step of performing an input process in which the center sight line position is reflected.

Moreover, a computer program according to the present invention controls an input device by performing: a weighting step of dividing a display screen area of a display device into a plurality of sections, and applying weighted values indicating accuracy to the plurality of sections in advance, the weighted values corresponding to a left eye sight line position and a right eye sight line position of a user; a right eye sight line position detection step of detecting the right eye sight line position of the user on a display screen of the display device based on captured data captured by a camera for a right eye, which is arranged in order to detect the right eye sight line position of the user, and displaying the right eye sight line position using coordinates; a right eye sight line position determination step of determining a coordinate value of a right eye sight line determination position by multiplying a weight indicating the accuracy and corresponding to the detected right eye sight line position into a coordinate value of the right eye sight line position; a left eye sight line position detection step of detecting the left eye sight line position of the user on a display screen of the display device based on captured data captured by a camera for a left eye, which is arranged in order to detect the left eye sight line position of the user, and displaying the left eye sight line position using coordinates; a left eye sight line position determination step of determining a coordinate value of a left eye sight line determination position by multiplying a weight indicating the accuracy and corresponding to the detected left eye sight line position into a coordinate value of the left eye sight line position; a sight line position determination step of determining a center sight line position according to both eyes of the user based on the determined coordinate value of a right eye sight line and the determined coordinate value of a left eye sight line; and an input step of performing an input process in which the center sight line position is reflected.

[Effects of the Invention]

As described above, according to the input device of the present invention, a center sight line position according to both eyes is determined based on a plurality of determined sight line positions, so that it is possible to determine sight line positions with a high degree of accuracy.

BRIEF DESCRIPTION OF THE DRAWINGS

Fig. 1 is an explanatory diagram illustrating a method in which an input device according to a first embodiment of the present invention detects a sight line direction.
Fig. 2 is a configuration diagram illustrating a hardware configuration of an input device according to a first embodiment of the present invention.
Fig. 3 is an explanatory diagram illustrating an example in which sections on a display screen of a display device are divided in an input device according to a first embodiment of the present invention.
Fig. 4 illustrates an image of a method in which sight line positions from respective cameras are calculated and a sight line position P is calculated by a weighted value in an input device according to a first embodiment of the present invention.
Fig. 5 is an explanatory diagram illustrating a general corneal reflection method for detecting a sight line.
Fig. 6 is an explanatory diagram illustrating a general elliptical parameter method for calculating a rotation angle of an iris.

Fig. 7 is an explanatory diagram illustrating the principle of sight line direction detection according to an elliptical parameter method.

Fig. 8 is a configuration diagram illustrating an example of a system configuration of an input device according to a first embodiment of the present invention.

EMBODIMENTS FOR CARRIYNG OUT THE INVENTION

The present invention provides a device that calculates sight line directions of the right and left eyes of a user and calculates a viewpoint of the user by a weighted average of the calculated sight line directions of the right and left eyes.

In more detail, a camera for the left eye and a camera for the right eye are separately prepared, and sight line positions obtained from the respective cameras for the left eye and the right eye are calculated using an elliptical parameter method. Particularly, when calculating the sight line positions obtained from the cameras, weights are set in advance for sections of a display image, and coordinates of the respective sight line positions obtained from the right and left cameras are weighted using the weights, so that the determination accuracy of the center sight line position of a user is improved.

Furthermore, the present invention obtains an input means actually equivalent to an input means that uses a click operation of a mouse from an operation for closing the eyelid of the left eye and an operation for closing the eyelid of the right eye.

Hereinafter, an input device according to a first embodiment of the present invention will be described in detail with reference to the accompanying drawings.

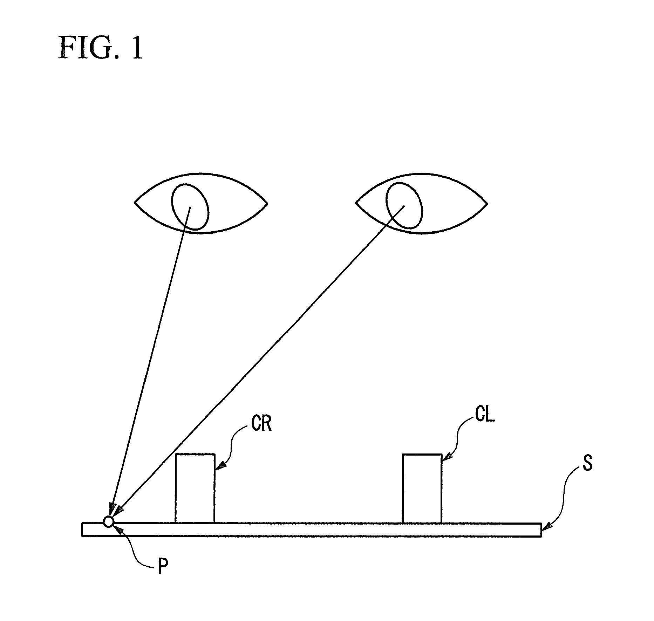

Fig. 1 is an explanatory diagram illustrating a method in which an input device according to a first embodiment of the present invention detects a sight line direction.

As illustrated in Fig. 1, in the sight line detection of the input device according to the first embodiment of the present invention, a camera for the left eye and a camera for the right eye are separately prepared, rotation angles of the right eye and the left eye are calculated, and positions obtained from the cameras using a favorable elliptical parameter method without considering the influence on the eyeball due to near infrared rays are weighted according to sections of a display image. In this way, a method for improving position accuracy is provided.

Furthermore, the camera for the left eye and the camera for the right eye are separately prepared, so that image recognition processes of the left eye and the right eye can be separately performed, and determination is performed to allow closing of the eyelid of the left eye to correspond to a left click operation and allow closing of the eyelid of the right eye to correspond to a right click operation, so that an input means actually equivalent to an input means according to a click operation of a mouse is provided.

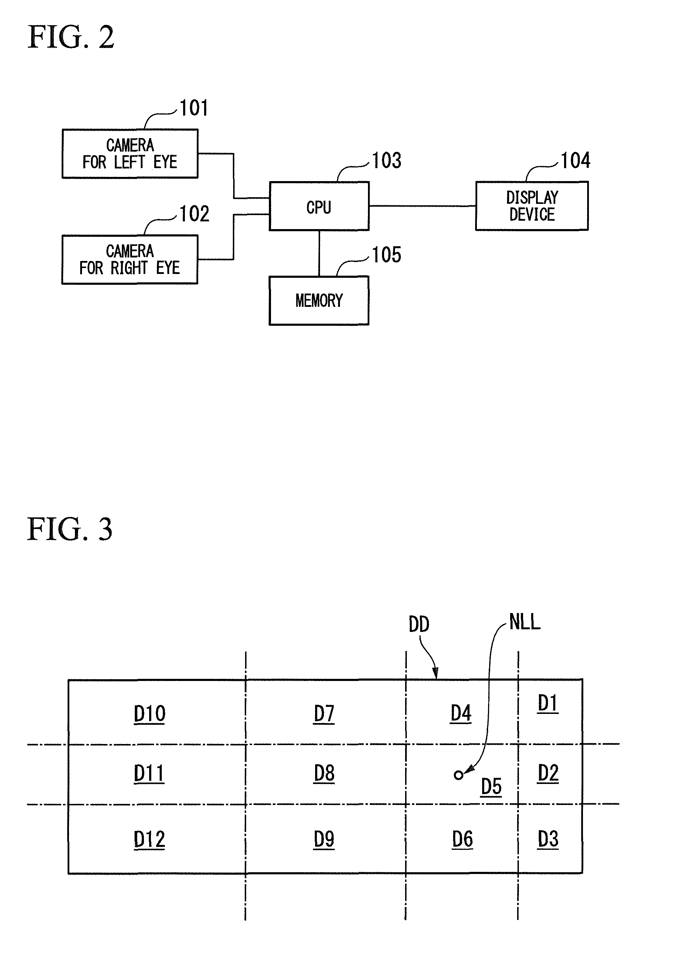

Fig. 2 is a configuration diagram illustrating a hardware configuration of the input device according to the first embodiment of the present invention.

The input device according to the first embodiment of the present invention as illustrated in Fig. 2 includes a camera 101 for the left eye for capturing the left eye, a camera 102 for the right eye for capturing the right eye, a CPU 103 for performing an image recognition process on images from the cameras 101 and 102, a memory 105 for temporarily storing a captured image, an image recognized image, and information of a calculation process, and a display device 104 (having an input function) for displaying an image. The display device 104 has an input function of inputting an instruction of a user.

Furthermore, the camera 101 for the left eye and the camera 102 for the right eye are arranged in the vicinity of a display screen (DD) of the display device 104.

In addition, the display device 104 may include another display device, for example, a general display device applicable to a cellular phone, a smart phone, a game machine, a tablet PC, a PC, and the like, as well as an HMD (Head Mounted Display).

For example, the present invention is also applicable to a game machine provided with two cameras.

Hereinafter, an operation of the input device according to the first embodiment of the present invention will be described.

First, the outline of a basic operation of the present device is as follows:

(1) The present device detects sight line positions of the right and left eyes using the two cameras for the left eye and the right eye.
(2) The present device multiplies sight line positions of the left eye and the right eye by weights set by a predetermined technique.
(3) The present device determines a (center) sight line of a user based on the weighted sight line.
(4) The present device displays the position of the sight line on a display screen of the display device 104.
(5) In the state in which it is not possible to determine the sight line position (that is, in the state in which a user has closed his or her eyelid), the present device sets the state as a trigger of a click operation.

(6) The present device sets the states of the right and left eyes as triggers of different types of click operations (for example, a left click and a right click) in the right and left eyes.

Next, the basic operation of the present device will be described.

Image data captured by the camera 101 for the left eye is stored in the memory 105.

The CPU 103 performs an image recognition process on an image of the stored image data.

The image recognition process, for example, is a process according to binarization, edge emphasis, and labeling.

As a detection method of an ellipse in the employed elliptical parameter method, it is possible to use a well-known technique such as elliptical estimation according to a Hough transformation, a minimum median, or an inscribed parallelogram. However, the detection method of the ellipse of the present invention is not limited to the aforementioned technique.

The CPU 103 calculates a horizontal angle and a vertical angle with respect to a normal line from the camera to the eyeball from an image of an iris recognized as an ellipse after the image recognition process is performed, and calculates a position on the display screen, which is pointed by the sight line of the left eye of a user, from a distance on the display device 104 between an eyeball center position and an eyeball radius, which have been obtained by calibration.

Furthermore, the CPU 103 also performs the same process as that of the image data captured by the camera 101 for the left eye on an image captured by the camera 102 for the right eye, thereby calculating a position on the display screen, which is pointed by the sight line of the right eye of the user.

Moreover, hereinafter, the term "camera" will be defined as the camera 101 for the left eye and a process on the image of the image data captured by the camera 101 for the left eye will be described. However, the same process as the following process is performed on the image captured by the camera 102 for the right eye.

Fig. 3 is an explanatory diagram illustrating an example in which the display screen of the display device 104 is divided into sections.

As illustrated in Fig. 3, the display screen DD (area) of the display device 104 is divided into 12 sections (D1 to D12).

Hereinafter, with reference to Fig. 3, an example of section division according to a normal line position from the camera to the eyeball Eb and a sight line detection position on the display screen and an example of weighting will be described.

As described in the conventional problem, it is well-known that in the elliptical parameter method, the accuracy becomes low as an ellipse approximates a circle.

That is, as there is a difference in a distance from the normal line position of the camera and the eyeball, it approximates an ellipse, and there is no difference, it approximates a circle.

In this regard, in the input device according to the first embodiment of the present invention, for example, weighting is performed as follows.

First, a weight for the section D5 in the nearest distance from a normal line position NLL is set to 0.3.

Next, a weight for the sections D1 to D4 and D7 to D9, which distances from the normal line position NLL are next to the section D5, is set to 0.5.

Last, a weight for the sections D10 to D12 in the remotest distance from the normal line position NLL is set to 0.8.

In addition, in Fig. 3, in order to simplify explanation, the display screen DD of the display device 104 is divided into 12 sections (D1 to D12). However, in the present invention, the division number is not limited to 12.

Furthermore, by the size of the display screen DD of the display device 104 and the accuracy to be achieved, it is possible to change the division number and a weighted coefficient.

Fig. 4 illustrates a concept diagram of a method in which the sight line positions from the cameras are calculated and the sight line detection position is calculated by a weighted value in the input device according to the first embodiment of the present invention.

When a sight line detection position from the left eye is set as coordinates $(x_1, y_1)$ and a weight (WL) is set to 0.8 (WL=0.8), and a sight line detection position from the right eye is set as coordinates $(x_2, y_2)$ and a weight (WR) is set to 0.3 (WR=0.3), coordinates (x, y) of a sight line center position of a user are calculated by Equation (3) and Equation (4) below.

$$x = x_2 - (x_1 - x_2) \times (0.8/(0.8+0.3)) \cdots(3)$$

$$y = y_2 - (y_1 - y_2) \times (0.8/(0.8+0.3)) \cdots(4)$$

In the first embodiment, states of the left eye and the right eye are captured using the two cameras (the camera 101 for the left eye and the camera 102 for the right eye) and the coordinates of the sight line center position of the user are calculated, so that it is possible to determine a period (in more detail, a time zone for which the user closes his or her eyes), in which it is not possible to detect the iris as an ellipse, as an operation corresponding to a click of a mouse, and to determine that closing the eyelid of the left eye corresponds to a left click operation and closing the eyelid of the right eye corresponds to a right click operation.

Furthermore, at this time, when the user closes the eyelid of one eye, since weighted coordinates of the one eye disappear, a pointing position is likely to deviate. However, for this point, when it is not possible to detect ellipses of both eyes, a process is performed to prevent the pointing position from moving from a position at which the ellipses of both eyes have been finally detected.

Furthermore, simple blinking is likely to be erroneously recognized as a click. However, for this problem, when a period (in more detail, a time zone for which the user closes his or her eyelids), in which it is not possible to detect an ellipse, is shorter than predetermined time, the blinking is prevented from being recognized as a click by providing a threshold value in the period in which it is not possible to detect the ellipse.

In accordance with the input device according to the first embodiment, weighting is performed for position information of sight lines calculated from the left eye and the right eye using the two cameras, so that it is possible to perform sight line detection with a high degree of accuracy.

Furthermore, at least one camera is allowed to separately correspond to the left eye and the right eye, so that it is possible to efficiently perform an image recognition process of the left eye and the right eye, and it is further possible to provide operations corresponding to a left click and a right click of a mouse.

Moreover, an operation of a PC is able to be performed by a sight line (movement of eyes) of a user, so that it is possible to improve the convenience of PC use with respect to a user who has difficulty moving his or her body due to disease and the like or a user who is unaccustomed to the PC.

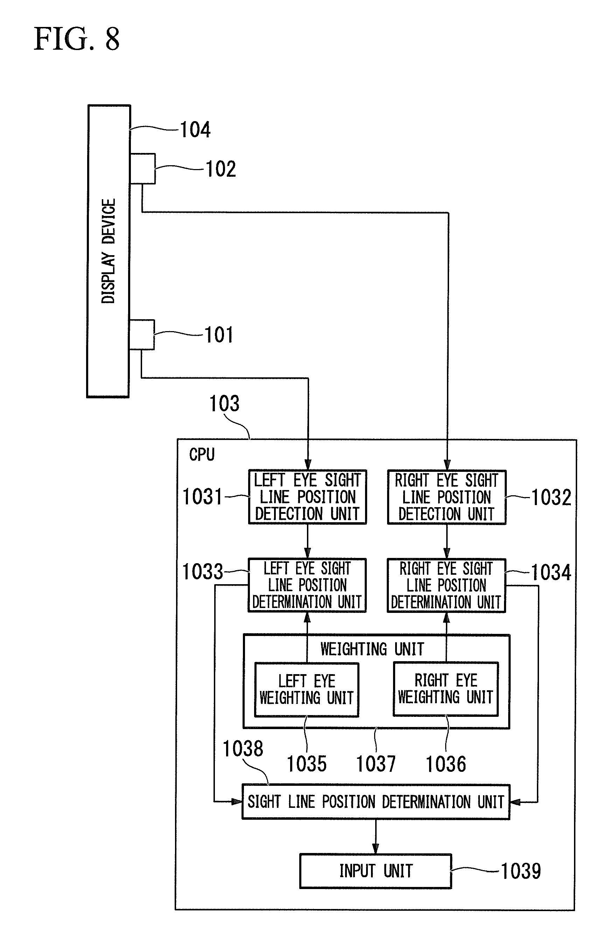

Fig. 8 is a block diagram illustrating an example of the configuration of the CPU 103 of the input device according to the first embodiment of the present invention.

The CPU 103 of the input device illustrated in Fig. 8 includes a left eye sight line position detection unit 1031 that detects a sight line position of the left eye, a right eye sight line position detection unit 1032 that detects a sight line position of the right eye, a left eye sight line position determination unit 1033 that determines the sight line position of the left eye using a coordinate value, a right eye sight line position determination unit 1034 that determines the sight line position of the right eye using a coordinate value, a weighting unit 1037 that applies a weight to (that is, weights) the sight line positions of the left eye and the right eye in advance, a sight line position determination unit 1038 that determines a center sight line position from the left and right sight line positions, and an input unit 1039 that performs information input in which the determined center sight line position is reflected.

The weighting unit 1037 includes a left eye weighting unit 1035 and a right eye weighting unit 1036.

(Second embodiment)

In the first embodiment, one camera for the left eye and one camera for the right eye are used, that is, a total of two cameras are used. However, in the second embodiment, a plurality of cameras may be separately used for each of the left eye and the right eye, so that it is possible to improve the accuracy of a sight line detection position.

Furthermore, the first embodiment employs a method for dividing the display screen into a predetermined number of sections. However, in the second embodiment, a weighting coefficient may be calculated in proportion to a distance between a normal line position of a camera and eyeballs and the sight line detection position.

The application is based on and claims the benefit of priority from prior Japanese Patent Application No. 2011-085210, filed April 7, 2011, the entire contents of which are incorporated herein.

INDUSTRICAL APPLICABILITY

Weighting based on verified accuracy in response to sight line detection positions according to captured data of two cameras for the left eye and the right eye is allowed to be performed for the respective sight line detection positions, so that it is possible to provide an input device capable of determining sight line positions with a high degree of accuracy.

[Description of Reference Symbols]

101    Camera for the left eye

102    Camera for the right eye

103    CPU

104    Display device (having input function)

105    Memory

1031   Left eye sight line position detection unit

1032   Right eye sight line position detection unit

1033   Left eye sight line position determination unit

1034   Right eye sight line position determination unit

1037   Weighting unit

1038   Sight line position determination unit

1039   Input unit


**Claims**

1.  An input device comprising:

    a weighting unit which divides a display screen area of a display device into a plurality of sections, and applies weighted values indicating accuracy to the plurality of sections in advance, the weighted values corresponding to a right eye sight line position and a left eye sight line position of a user;
    a right eye sight line position detection unit which detects the right eye sight line position of the user on a display screen of the display device based on captured data captured by a camera for a right eye, which is arranged in order to detect the right eye sight line position of the user, and displays the right eye sight line position using coordinates;
    a right eye sight line position determination unit which determines a coordinate value of a right eye sight line determination position by multiplying a weight indicating the accuracy and corresponding to the detected right eye sight line position into a coordinate value of the right eye sight line position;
    a left eye sight line position detection unit which detects the left eye sight line position of the user on a display screen of the display device based on captured data captured by a camera for a left eye, which is arranged in order to detect the left eye sight line position of the user, and displays the left eye sight line position using coordinates;
    a left eye sight line position determination unit which determines a coordinate value of a left eye sight line determination position by multiplying a weight indicating the accuracy and corresponding to the detected left eye sight line position into a coordinate value of the left eye sight line position;
    a sight line position determination unit which determines a center sight line  position according to both eyes of the user based on the determined coordinate value of a right eye sight line and the determined coordinate value of a left eye sight line; and
    an input unit which performs an input process in which the center sight line position is reflected.

2.  The input device according to claim 1, wherein each of the right eye sight line position detection unit and the left eye sight line position detection unit uses an elliptical parameter method as a detection method of a sight line position.

3.  The input device according to claim 1 or 2, wherein the weighting unit applies, as the weighted value indicating the accuracy and corresponding to the right eye of the user, a large weighted value to a section which is near a normal line linking the camera for the right eye to a right eyeball of the user among the sections, and a small weighted value to a section which is remote from the normal line.

4.  The input device according to one of claims 1 to 3, wherein the weighting unit applies, as the weighted value indicating the accuracy and corresponding to the left eye of the user, a large weighted value to a section which is near a normal line linking the camera for the left eye to a left eyeball of the user among the sections, and a small weighted value to a section which is remote from the normal line.

5. The input device according to claim 3, wherein the right eye sight line position determination unit uses, as the weighted value indicating the accuracy and corresponding to the right eye of the user, the weighted value applied by the weighting unit.

6. The input device according to claim 4, wherein the left eye sight line position determination unit uses, as the weighted value indicating the accuracy and corresponding to the left eye of the user, the weighted value applied by the weighting unit.

7. The input device according to claim 1, wherein the right eye sight line position determination unit uses, as the weighted value indicating the accuracy and being used corresponding to the right eye of the user, a large value with respect to the right eye sight line position detected by the right eye sight line position detection unit which is near a normal line linking the camera for the right eye to a right eyeball of the user, and a small weighted value with respect to the right eye sight line position that is remote from the normal line.

8. The input device according to claim 1, wherein the left eye sight line position determination unit uses, as the weighted value indicating the accuracy and being used corresponding to the left eye of the user, a large value with respect to the left eye sight line position detected by the left eye sight line position detection unit, which is near from a normal line linking the camera for the left eye to a left eyeball of the user, and a small weighted value with respect to the left eye sight line position that is remote from the normal line.

9. An input method comprising:

a weighting step of dividing a display screen area of a display device into a plurality of sections, and applying weighted values indicating accuracy to the plurality of sections in advance, the weighted values corresponding to a left eye sight line position and a right eye sight line position of a user;

a right eye sight line position detection step of detecting the right eye sight line position of the user on a display screen of the display device based on captured data captured by a camera for a right eye, which is arranged in order to detect the right eye sight line position of the user, and displaying the right eye sight line position using coordinates;

a right eye sight line position determination step of determining a coordinate value of a right eye sight line determination position by multiplying a weight indicating the accuracy and corresponding to the detected right eye sight line position into a coordinate value of the right eye sight line position;

a left eye sight line position detection step of detecting the left eye sight line position of the user on a display screen of the display device based on captured data captured by a camera for a left eye, which is arranged in order to detect the left eye sight line position of the user, and displaying the left eye sight line position using coordinates;

a left eye sight line position determination step of determining a coordinate value of a left eye sight line determination position by multiplying a weight indicating the accuracy and corresponding to the detected left eye sight line position into a coordinate value of the left eye sight line position;

a sight line position determination step of determining a center sight line position according to both eyes of the user based on the determined coordinate value of a right eye sight line and the determined coordinate value of a left eye sight line; and

an input step of performing an input process in which the center sight line position is reflected.

10. A computer program for controlling an input device by performing:

a weighting step of dividing a display screen area of a display device into a plurality of sections, and applying weighted values indicating accuracy to the plurality of sections in advance, the weighted values corresponding to a left eye sight line position and a right eye sight line position of a user;

a right eye sight line position detection step of detecting the right eye sight line position of the user on a display screen of the display device based on captured data captured by a camera for a right eye, which is arranged in order to detect the right eye sight line position of the user, and displaying the right eye sight line position using coordinates;

a right eye sight line position determination step of determining a coordinate value of a right eye sight line determination position by multiplying a weight indicating the accuracy and corresponding to the detected right eye sight line position into a coordinate value of the right eye sight line position;

a left eye sight line position detection step of detecting the left eye sight line position of the user on a display screen of the display device based on captured data captured by a camera for a left eye, which is arranged in order to detect the left eye sight line position of the user, and displaying the left eye sight line position using coordinates;

a left eye sight line position determination step of determining a coordinate value of a left eye sight line determination position by multiplying a weight indicating the accuracy and corresponding to the detected left eye sight line position into a coordinate value of the left eye sight line position;

a sight line position determination step of determining a center sight line position according to both eyes of the user based on the determined coordinate value of a right eye sight line and the determined coordinate value of a left eye sight line; and

an input step of performing an input process in which the center sight line position is reflected.

# FIG. 1

# FIG. 2

CAMERA FOR LEFT EYE ~101

CAMERA FOR RIGHT EYE ~102

CPU ~103

DISPLAY DEVICE ~104

MEMORY ~105

# FIG. 3

DD    NLL

| D10 | D7 | D4 | D1 |
| D11 | D8 | | D2 |
| | | D5 | |
| D12 | D9 | D6 | D3 |

## FIG. 4

## FIG. 5

FIG. 6

FIG. 7

FIG. 8

| INTERNATIONAL SEARCH REPORT | International application No. |
|---|---|
| | PCT/JP2012/059155 |

**A. CLASSIFICATION OF SUBJECT MATTER**
*G06F3/033*(2006.01)i, *G06T1/00*(2006.01)i

According to International Patent Classification (IPC) or to both national classification and IPC

**B. FIELDS SEARCHED**

Minimum documentation searched (classification system followed by classification symbols)
G06F3/033, G06T1/00

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 09-163267 A (Sony Corp.), 20 June 1997 (20.06.1997), paragraph [0032] (Family: none) | 1-10 |
| A | JP 2006-309291 A (National University Corporation Shizuoka University), 09 November 2006 (09.11.2006), entire text; all drawings (Family: none) | 1-10 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 July, 2012 (02.07.12) | 10 July, 2012 (10.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

**Patent documents cited in the description**

- JP 2000148381 A
- JP 2001134371 A
- JP 9009253 A
- JP 2011085210 A